# EUROPÄISCHE PATENTSCHRIFT

(11) **EP 0 716 883 B1**
(45) Veröffentlichungstag und Bekanntmachung des Hinweises auf die Patenterteilung: **31.03.1999**
(21) Anmeldenummer: 95119262.4
(22) Anmeldetag: 07.12.1995
(51) Int. Cl.: B01J 21/06, C01G 25/02

(54) **Verfahren zur Herstellung Katalysatoren oder Träger die im wesentlichen aus monoklinem Zirconiumdioxid bestehen**
Method of preparing catalysts or carriers consisting essentially of monoclinic zirconia
Une méthode de la préparation des catalyseurs ou supports constitués essentiellement de dioxyde de zirconium monoclinique

(30) Priorität: 17.12.1994 DE 4445142
(43) Veröffentlichungstag der Anmeldung: 19.06.1996
(73) Patentinhaber: BASF AKTIENGESELLSCHAFT, 67056 Ludwigshafen (DE)
(72) Erfinder: Irgang, Matthias, Dr., D-69121 Heidelberg (DE); Hesse, Michael, Dr., D-67105 Schifferstadt (DE); Schnurr, Werner, Dr., D-67273 Herxheim (DE); Dr. Joachim Wulff-Döring, 67227 Frankenthal (DE)

(56) Entgegenhaltungen:
- EP-A- 0 460 738
- EP-A- 0 520 543
- US-A- 5 130 287
- DATABASE WPI Week 8833 Derwent Publications Ltd., London, GB; AN 88233802 XP002005057 & SU-A-1 370 079 (PHIS CHEM INST) , 30.Januar 1988
- JOURNAL OF THE AMERICAN CERAMIC SOCIETY, Bd. 73, Nr. 9, 1.September 1990, Seiten 2760-2763, XP000164871 RAMAMURTHI S D ET AL: "NANOMETER-SIZED ZRO2 PARTICLES PREPARED BY A SOL-EMULSION-GEL METHOD"

## Beschreibung

Die vorliegende Erfindung betrifft Katalysatoren oder Träger die im wesentlichen aus monoklinem Zirconiumdioxid bestehen und durch Fällung von speziellen Zirconiumsalzen mit wäßrigen Ammoniaklösungen bei sinkenden pH-Werten von 14 bis 6, Trocknung, Calcinierung und Tablettierung erhalten werden.

Kristallines Zirconiumdioxid kommt unterhalb von 1000°C in einer stabilen monoklinen und daneben in einer metastabilen tetragonalen Modifikation vor.

Aus Catalysis Today 20 (1994), Seite 199 bis 218 und 295 bis 312 ist die Erzeugung von Zirconiumdioxid-Pulvern mit definierter Kristallstruktur bekannt.

Die Herstellung von monoklinem Zirconiumdioxid mit hoher Oberfläche stößt auf große Schwierigkeiten, da bei Fällungen meist der wasserreiche alpha-Typ des Zirconiumhydroxids entsteht und daraus das metastabile tetragonale ZrO₂, das erst oberhalb von 650°C in die monokline Modifikation übergeht und bei der Temperung seine Oberfläche stark vermindert.

Nach Catalysis Today 20 (1994), Seite 295 bis 312 erhält man eine Mischung von ca. 70 % der monoklinen und ca. 30 % der tetragonalen Modifikation des ZrO₂, wenn Fällungen aus Zirconiumsalzen und KOH bei pH-Werten zwischen 8 und 12 hydrothermal behandelt werden. Man kann auch Zirconylchlorid mittels Hydrolyse durch Kochen bei pH<1 in das monokline ZrO₂ überführen.

Ähnliche Fällungen von Zirconiumhydroxid durch Zugabe von Ammoniak zu Zirconylnitrat-Lösung werden in FR-A-25 90 887 Beispiel 1 und in J. Catalysis 141 (1993) Seite 280 beschrieben.

In DE-A-34 06 185 und DE-A-38 03 898 werden Verfahren zur Fertigung von ZrO₂-Tabletten angegeben, nach denen pyrogen hergestelltes Zirconiumdioxidpulver mit organischen und anorganischen Bindemitteln gemischt, tablettiert und bei 700°C getempert wird.

Derartige Formkörper enthalten ca. 50 % tetragonales Zirconiumdioxid und besitzen durch die Temperung oberhalb von 600°C eine für die meisten katalytischen Verfahren zu geringe Oberfläche.

Weitere Formkörper aus ZrO₂ sind in WO-A-94/08914, US-A-5 269 990, FR-A-25 90 887 und in EP-A-244 301 beschrieben. Ausgehend von Zirconiumhydroxid oder -oxid wird mit Hilfe geeigneter Zusätze eine formbare Masse hergestellt, die extrudiert, getrocknet und bei 400 bis 700°C calciniert wird.

SU-A-1 370 079 beschreibt die Herstellung von ZrO₂ über einen sol-gel Prozeß, der die Verwendung von organischen Losungsmitteln und das Ausschleppen von Wasser erfordert. J. Am. Ceram. Soc. 73, 2760-3 (1990) beschreibt einen Weg zu monoklinem ZrO₂ durch hydrothermale Behandlung in Autoklaven.

Diese extrudierten Katalysatoren besitzen hohe Abriebswerte und sind daher für viele Anwendungen ungeeignet.

Der vorliegenden Erfindung lag daher die Aufgabe zugrunde, den zuvor genannten Nachteilen abzuhelfen.

Demgemäß wurden neue und verbesserte Katalysatoren oder Träger gefunden, die im wesentlichen aus monoklinem Zirconiumdioxid bestehen, hergestellt durch Fällung von Zirconiumsalzen mit Ammoniak, welche dadurch gekennzeichnet sind, daß man eine Zirconylnitrat- oder Zirconylchlorid-Lösung zu einer wäßrigen Ammoniaklösung zugibt, wobei der pH-Wert von 14 bis 6 absinkt, das Fällungsprodukt auswäscht, trocknet, calciniert und tablettiert.

Die erfindungsgemäßen Katalysatoren oder Träger, die in der Regel zu 85 bis 100 Gew.-%, bevorzugt zu 90 bis 100 Gew.-% aus monoklinem zirconiumdioxid bestehen, lassen sich wie folgt herstellen:

Zunächst stellt man aus Zirconiumcarbonat und Salzsäure eine möglichst konzentrierte, in der Regel 2 bis 5 mol-%ige Zirconiumchlorid-Lösung oder bevorzugt aus Zirconiumcarbonat und Salpetersäure eine möglichst konzentrierte, in der Regel 2 bis 5 mol-%ige Zirconiumnitrat-Lösung her. Diese Lösung wird in der Regel bei Temperaturen von 20 bis 60°C unter Kontrolle des pH-Wertes zu einer vorgelegten Wasser/Ammoniak-Mischung (ca. 15 mol-% NH₃) zugegeben, wobei die Zugabe bei pH-Werten von 6 bis 8 beendet wird und der pH nicht unter 6 (kleiner als 6) fallen darf.

Das Fällungsprodukt kann auf einer Filterpresse ausgewaschen und von Ammoniumsalzen im wesentlichen befreit, getrocknet und bei Temperaturen von 300 bis 600°C, bevorzugt bei 400 bis 500°C und Drücken von 0,05 bis 1 bar calciniert werden. Gelegentlich enthält das so hergestellte Zirconiumdioxid noch einen kleinen Anteil der tetragonalen Modifikation. Diesen Anteil kann man bis zur röntgenographischen Nachweisgrenze reduzieren, wenn die Trocknung unter einem Wasserdampfpartialdruck von 0,2 bis 0,9 bar durchgeführt wird. Die Trocknung erfordert dann bei 120°C in der Regel ca. 16 Stunden.

Das bei 400°C calcinierte monokline Zirconiumdioxidpulver kann wie folgt weiterverarbeitet werden:

Das ZrO₂-Pulver (Korngröße 10 bis 100 µm) wird mit 0,5 bis 10 Gew.-%, bevorzugt 1 bis 5 Gew.-%, eines Tablettierhilfsmittels wie Graphit oder Magnesiumstearat gemischt und mit Preßdrucken von 1 bis 30 kN, bevorzugt 1 bis 15 kN, besonders bevorzugt 1 bis 6 kN pro Tablette z.B. auf einer Exzenter- oder Rundläufer-Tablettiermaschine verpreßt. Zur Verbesserung der Wasserfestigkeit kann eine weitere Temperung bei Temperaturen von 300 bis 600°C angeschlossen werden.

Diese Methode liefert hochfeste und abriebarme ZrO₂-Katalysatortabletten. Insbesondere weisen sie in der Regel eine für Zirconiumdioxid hohe BET-Oberfläche von 60 bis 150 m²/g, bevorzugt 80 bis 100 m²/g und eine Porosität von 0,1 bis 0,5 ml/g, in der Regel über 0,20 ml/g, also 0,25 bis 0,5 ml/g auf.

Die durch Quecksilberporosimetrie ermittelte Porenverteilung zeigt in der Regel zwei Maxima bei Porenradien von ca. 70 AE und 4000 AE. Der Anteil der Makroporen mit Porenradien über 1000 AE beträgt 20 bis 50 %, in der Regel 20 bis 35 % des Gesamtporenvolumens.

Die Seitendruckfestigkeit bei 3x3-mm-Tabletten erreicht in der Regel 50 bis 200 N.

Ihr Anrieb beträgt nach 2-stündiger Behandlung mit Porzellankugeln in einer Vibratom-Schwingmühle mit einer Frequenz von 25 Hz 1 bis 10 %, bevorzugt 1 bis 5 %.

Die erhaltenen Tabletten sind sowohl gegenüber Säuren als auch gegenüber Basen chemisch besonders stabil.

Das beschriebene Herstellungsverfahren vermeidet langdauernde und schwierig zu realisierende Verfahrensstufen, wie z.B. hydrothermale Bedingungen und ist daher weniger aufwendig.

Der wesentliche Vorteil der erfindungsgemäßen Zirconiumdioxid-Tabletten besteht in ihrer hohen mechanischen Festigkeit und in ihrem hohen Anteil an monokliner Kristallstruktur.

Die erfindungsgemäßen Fällungsprodukte oder deren Formmassen können durch Imprägnieren, Beschichten oder Aufsprühen von Metallen oder Metallsalzlösungen wie den Nitraten, Acetaten oder Formiaten der Übergangselemente, bevorzugt den Nitraten von Ni, Co, Cu, Pd, Pt sowie von Mn, Cr und La dotiert werden.

Diese Katalysatoren werden bevorzugt für Hydrierungen und Dehydrierungen eingesetzt.

Als Träger für saure Katalysatoren und Supersäuren geht man in der Regel von dem nach obigem Verfahren gefällten Zirconiumhydroxid aus, dotiert mit Schwefelsäure oder Heteropolysäuren, trocknet, tablettiert und calciniert die fertigen Tabletten.

Die ZrO₂-haltigen Katalysatoren können z.B. bei Hydrierungen von aromatischen Carbonsäuren zu den entsprechenden Aldehyden, bei der Fischer-Tropsch-Synthese, beim Steamreforming und bei der Entschwefelung und in Form von sulfatisierten Zirconiumoxiden als Supersäuren bei Isomerisierungen oder Polymerisationen eingesetzt werden.

### Beispiele

### Beispiel 1

Durch Auflösen von Zirconiumcarbonat (MEL, ca. 43 Gew.-% ZrO₂) in konzentrierter Salpetersäure erhielt man eine Zirconylnitrat-Lösung mit einem Gehalt von 19 Gew.-% ZrO₂ und einer Dichte von 1,57 g/ml.

In einem Rührbehälter wurde Ammoniakwasser (12,5 Gew.-% NH₃) vorgelegt, dann pumpte man die Zirconylnitrat-Lösung bei gleichzeitigem Rühren innerhalb von 60 Minuten zu, bis der pH-Wert von 7,5 erreicht war. Dabei erhöhte sich die Temperatur auf 54°C. Nach einer Nachrührzeit von 10 Minuten wurde auf einer Filterpresse bis zu einer Leitfähigkeit von 20 µS/cm ausgewaschen, bei 120°C getrocknet und bei 400°C calciniert.

Das Produkt war feinkristallin und hatte eine BET-Oberfläche von 81 m²/g. Es bestand zu 95 % aus monoklinem und zu 5 % aus tetragonalem Zirconiumdioxid.

Dieses Pulver wurde mit 3 % Magnesiumstearat intensiv gemischt und auf einer Rundläufer-Tablettiermaschine zu 3x3-mm-Tabletten verpreßt. Anschließend folgte eine weitere Temperung bei 400°C. Die erhaltenen Tabletten hatten folgende Eigenschaften:

| | |
|---|---|
| Schüttgewicht: | 1290 g/l |
| Porosität: | 0,22 ml/g |
| BET-Oberfläche: | 74 m²/g |
| Seitendruckfestigkeit: | 94 N |
| Stirndruckfestigkeit: | 4272 N/cm² |
| Abrieb: | 2,2 % |

### Beispiel 2

Man führte die Fällung wie in Beispiel 1 durch und trocknete das Fällungsprodukt 16 Stunden bei 120°C in einer Wasserdampfatmosphäre (Wasserdampfpartialdruck ca. 0,7 bar). Dann wurde calciniert, zu 3x3-mm-Tabletten verpreßt und nochmals getempert.

Die fertigen Tabletten enthielten kein röntgenographisch nachweisbares tetragonales ZrO₂.

Die erhaltenen Tabletten hatten folgende Eigenschaften:

| | |
|---|---|
| Schüttgewicht: | 1280 g/l |
| Porosität: | 0,22 ml/g |
| BET-Oberfläche: | 91 m²/g |
| Seitendruckfestigkeit: | 90 N |
| Stirndruckfestigkeit: | 6596 N/cm² |
| Abrieb: | 3,6 % |

### Beispiel 3

Zirconiumdioxid-Tabletten, die gemäß Beispiel 1 hergestellt wurden, wurden mit einer wäßrigen Lanthannitrat-Lösung unter guter Durchmischung getränkt und zwei Stunden bei Raumtemperatur gehalten. Anschließend wurden sie bei 120°C getrocknet und 2 Stunden bei 400°C calciniert. Der so hergestellte Katalysator enthielt 3,5 Gew.-% La₂O₃.

Der La₂O₃/ZrO₂-Katalysator wurde für die Hydrierung von Benzoesäure zu Benzaldehyd eingesetzt. In einem Rohrreaktor, der 100 ml Katalysator enthielt, wurden 8 g/h geschmolzene Benzoesäure und 100 l/h Wasserstoff bei 340°C und Normaldruck über den Katalysator geleitet. Der gasförmige Reaktionsaustrag wurde in Kühlfallen kondensiert und gaschromatographisch analysiert. Die Benzaldehyd-Ausbeute betrug 98 % bei einem Umsatz von 100 %.

### Vergleichsbeispiel A (Appl. Catalysis, 57 (1990), S. 128-129)

Eine Zirconylnitrat-Lösung mit einem ZrO₂-Gehalt von 15 Gew.-% wurde durch Lösen von Zirconiumcarbonat (MEL, ca. 43 Gew.-% ZrO₂) in konzentrierter Salpetersäure hergestellt.

Dann wurden in vorgelegtes VE-Wasser unter Rühren gleichzeitig Ammoniakwasser (12,5 Gew.-% NH₃) und Zirconylnitrat-Lösung zugepumpt. Dabei wurde der pH-Wert in der Fällung auf 9,3 konstant gehalten. Nach einer Nachrührzeit von 10 Minuten wurde zur Vermeidung der Geruchsbelästigung der pH-Wert mittels Salpetersäure auf pH = 7,5 eingestellt.

Das Fällungsprodukt wurde ausgewaschen, getrocknet und bei 400°C calciniert. Man erhielt ein feinkristallines Pulver, bestehend aus 60 % tetragonalem und 40 % monoklinem Zirconiumdioxid.

### Vergleichsbeispiel B (nach FR-A-25 90 887, Beispiel 1)

Aus 60 %iger Salpetersäure und Zirconiumcarbonat (MEL, ca. 44 Gew.-% ZrO₂) und anschließendes Verdünnen mit vollentsalztem Wasser wurde eine Lösung, die 3,75 Gew.-% ZrO₂ (0,3 molar) enthielt, hergestellt.

Diese Lösung (pH = 0,75) wurde in einem Rührbehälter vorgelegt. Dann wurde innerhalb von 6 Minuten Ammoniakwasser (25 Gew.-% NH₃) bis zu einem pH-Wert von 10,4 zugepumpt.

Das Fällungsprodukt wurde auf einer Filterpresse bis zu einer konstanten Leitfähigkeit von 20 µS/cm ausgewaschen, bei 120°C getrocknet und 2 Stunden bei 400°C calciniert. Das erhaltene Zirconiumdioxid mit einer BET-Oberfläche von 149 m²/g war feinkristallin und enthielt ca. 80 % tetragonale und ca. 20 % monokline Modifikation.

### Vergleichsbeispiel C (nach Catalysis Today 20 (1994) Seite 296)

Eine Zirconylnitrat-Lösung mit einem ZrO₂-Gehalt von 15 Gew.-% wurde durch Lösen von Zirconiumcarbonat (MEL, ca. 43 Gew.-% ZrO₂) in konzentrierter Salpetersäure hergestellt und unter Rühren am Rückfluß gekocht; dabei lag der pH-Wert unter 1. Nach ca. 10 Minuten trat eine Trübung auf, die sich bei weitere Kochen bis zur Niederschlagsbildung verstärkte. Nach 50 stündigem Erhitzen am Rückfluß wurde der Niederschlag abfiltriert, gewaschen, getrocknet und bei 400°C calciniert. Das Produkt hatte eine BET-Oberfläche von 155 m²/g und bestand zu 80 % aus tetragonalem und zu 20 % aus monoklinem Zirconiumdioxid.

Das Material war nicht tablettierbar.

### Vergleichsbeispiel D

ZrO₂-Extrudate mit einer BET-Oberfläche von 100 m²/g und tetragonaler Struktur wurden zur Katalysatorherstellung verwendet.

Die Tränkung mit einer Lanthannitrat-Lösung und die Prüfung als Hydrierkatalysator wurde wie in Beispiel 3 durchgeführt.

Die gaschromatographisch ermittelte Benzaldehyd-Ausbeute betrug 39 % bei einem Umsatz von 43 %.

## Patentansprüche

1. Verfahren zur Herstellung von Katalysatoren oder Trägern, die im wesentlichen aus monoklinem Zirconiumdioxid bestehen, durch Fällung von Zirconiumsalzen mit Ammoniak, dadurch gekennzeichnet, daß man eine Zirconylnitrat- oder Zirconylchlorid-Lösung zu einer wäßrigen Ammoniaklösung bei fallenden pH-Werten von 14 bis 6 zufügt, trocknet, calciniert und tablettiert.

2. Verfahren zur Herstellung von Katalysatoren oder Trägern nach Anspruch 1, dadurch gekennzeichnet, daß man eine Zirconylnitrat- oder Zirconylchlorid-Lösung zu einer wäßrigen Ammoniaklösung bei fallenden pH-Werten von 14 bis 7 zufügt.

3. Verfahren zur Herstellung von Katalysatoren oder Trägern nach Anspruch 1, dadurch gekennzeichnet, daß man eine Zirconylnitrat- oder Zirconylchlorid-Lösung zu einer wäßrigen Ammoniaklösung bei fallenden pH-Werten von 14 bis 7,5 zufügt.

4. Verfahren zur Herstellung von Katalysatoren oder Trägerm nach Anspruch 1, dadurch gekennzeichnet, daß man das Fällungsprodukt abfiltriert, Ammoniumsalze entfernt, bei einem Wasserdampfpartialdruck von 0,2 bis 0,9 bar trocknet und bei Temperaturen von 300 bis 600°C calciniert.

5. Verfahren zur Herstellung von Katalysatoren oder Trägern nach Anspruch 1, dadurch gekennzeichnet, daß man Tablettierungshilfsmittel zusetzt und auf Exzenter- oder Rundläufermaschinen verpreßt.

6. Verfahren zur Herstellung von Katalysatoren oder Trägern nach Anspruch 1, dadurch gekennzeichnet, daß man das Fällungsprodukt oder deren Formmassen durch Imprägnieren, Beschichten oder Aufsprühen von Metallen oder Metallsalzlösungen dotiert.

## Claims

1. A process for the preparation of a catalyst or carrier which consists essentially of monoclinic zirconium dioxide by precipitation of a zirconium salt with ammonia, wherein a zirconyl nitrate or zirconyl chloride solution is added to an aqueous ammonia solution at a decreasing pH from 14 to 6 and drying, calcination and pelletization are carried out.

2. A process for the preparation of a catalyst or carrier as claimed in claim 1, wherein a zirconyl nitrate or zirconyl chloride solution is added to an aqueous ammonia solution at a decreasing pH from 14 to 7.

3. A process for the preparation of a catalyst or carrier as claimed in claim 1, wherein a zirconyl nitrate or zirconyl chloride solution is added to an aqueous ammonia solution at a decreasing pH from 14 to 7.5.

4. A process for the preparation of a catalyst or carrier as claimed in claim 1, wherein the precipitated product is filtered off, ammonium salts are removed, and drying is effected at a water vapor partial pressure of from 0.2 to 0.9 bar and calcination is carried out at from 300 to 600°C.

5. A process for the preparation of a catalyst or carrier as claimed in claim 1, wherein pelletizing assistants are added and compression is effected on an eccentric or rotary tablet press.

6. A process for the preparation of a catalyst or carrier as claimed in claim 1, wherein the precipitated product or moldings thereof is or are doped by impregnation, coating or spraying with metals or metal salt solutions.

## Revendications

1. Procédé de préparation de catalyseurs ou de supports qui sont constitués essentiellement de dioxyde de zirconium monoclinique, par précipitation de sels de zirconium avec de l'ammoniac, caractérisé en ce qu'on ajoute une solution de nitrate de zirconyle ou de chlorure de zirconyle à une solution aqueuse d'ammoniac à des valeurs de pH précipitantes de 14 à 6, on sèche, on calcine et on transforme en comprimés.

2. Procédé de préparation de catalyseurs ou de supports suivant la revendication 1, caractérisé en ce qu'on ajoute une solution de nitrate de zirconyle ou de chlorure de zirconyle à une solution aqueuse d'ammoniac à des valeurs de pH précipitantes de 14 à 7.

3. Procédé de préparation de catalyseurs ou de supports suivant la revendication 1, caractérisé en ce qu'on ajoute une solution de nitrate de zirconyle ou de chlorure de zirconyle à une solution aqueuse d'ammoniac à des valeurs de pH précipitantes de 14 à 7,5.

4. Procédé de préparation de catalyseurs ou de supports suivant la revendication 1, caractérisé en ce qu'on sépare le produit de précipitation par filtration, on élimine des sels d'ammonium, on sèche à une pression partielle de vapeur d'eau de 0,2 à 0,9 bar et on calcine à des températures de 300 à 600°C.

5. Procédé de préparation de catalyseurs ou de supports suivant la revendication 1, caractérisé en ce qu'on ajoute des agents auxiliaires de formation de comprimés et en ce qu'on comprime sur des machines à excentrique ou des machines rotatives.

6. Procédé de préparation de catalyseurs ou de supports suivant la revendication 1, caractérisé en ce qu'on dope le produit de précipitation ou des masses à façonner de ce dernier par imprégnation, enduction ou aspersion de métaux ou de solutions de sel métallique.
